Europäisches Patentamt

European Patent Office

Office européen des brevets

(19)

(11) **EP 1 271 871 A1**

(12) **EUROPEAN PATENT APPLICATION**

(43) Date of publication:
**02.01.2003 Bulletin 2003/01**

(51) Int Cl.⁷: **H04L 27/00**

(21) Application number: **01401631.5**

(22) Date of filing: **20.06.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **MOTOROLA, INC.**
**Schaumburg Illinois 60196 (US)**

(72) Inventors:
- **Lehning, Heinz**
  **CH-Tannay 1295 (CH)**

- **Gercekci, Anil**
  **CH-Bellevue1293 (CH)**
- **Simoens, Sebastien**
  **78210 St Cyr l'Ecole (FR)**

(74) Representative: **Potts, Susan Patricia et al**
**Motorola European Intellectual Property
Section,
Law Department,
Midpoint,
Alencon Link
Basingstoke, Hampshire RG21 7PL (GB)**

(54) **Compensation of mismatch between quadrature paths**

(57)     An apparatus for improving signal mismatch compensation between first and second RF signals comprises: at least one switch which applies a first RF signal, present on a first pathway, and a second RF signal, present on a second pathway, to respective first and second frequency mixers, during a first time period; the mixers provide a first pair of mixed first and second RF signals. Means for reversing the at least one switch, during a subsequent time period is provided so that the first RF signal is applied to the second mixer, via the second pathway, and the second RF signal is applied to the first mixer, via the first pathway. The mixers thereby provide a second pair of mixed first and second RF signals. Monitoring monitors respective first and second pairs of mixed RF signals during an interval. The monitoring means provides time averaged values for the first and second signals in each of said first and second pairs of RF signals, so that effects of signal mismatch on the first and second RF signals are minimised in each channel, by subjecting said RF signals in each channel, for substantially the same time, to the same pathways.

FIG. 8

**Description**

**Field of the Invention**

The present invention relates to an apparatus for improving signal mismatch compensation and a related method. The apparatus and related method are particularly, but not exclusively, suitable for use with Radio Frequency (RF) Wireless Local Area Networks (WLAN's).

**Background of the Invention**

As greater demands are placed on RF systems, for example in WLAN's, in order to increase channel capacity by utilizing available bandwidth, corresponding demands are placed upon performance and tolerance of components used in their RF circuits.

Various standards have been developed in order to increase channel capacity. HIPERLAN 2 is a Wireless Local Area Network (WLAN) protocol, based on, and incorporating, an Orthogonal Frequency Division Multiplexing (OFDM) scheme.

An advantage of using an OFDM scheme for transmitting RF signals is that it is possible to transmit more data for a given channel bandwidth than was previously possible. OFDM transceivers are used in Digital Audio Broadcast (DAB); Digital Video Broadcast (DVB); Asymmetric Digital Subscriber Loop (ADSL) transmission techniques, as well as wireless broadband transmission techniques such as IEEE 802.11A; and the Japanese MMAC standard. Most systems require transmit and receive sections for bi-directional communication. DVB is an exception due to its one way communication nature.

The following modulation formats may be incorporated in the HIPERLAN 2 scheme: Binary Phase Shift Keying (BPSK); Quadrature Phase Shift Keying (QPSK); and Quadrature Amplitude Modulation (16 QAM) or 64 QAM. The flexibility of use of the aforementioned modulation techniques means that data rates of between 6 to 54 Mbit/s can be transmitted.

A particular advantage of the HIPERLAN 2 scheme, is that systems incorporating it may be used in offices, shops, airports or in similar environments, which were previously prone to multipath dispersion. This is because RF transmissions which use HIPERLAN 2 are reflection resistant.

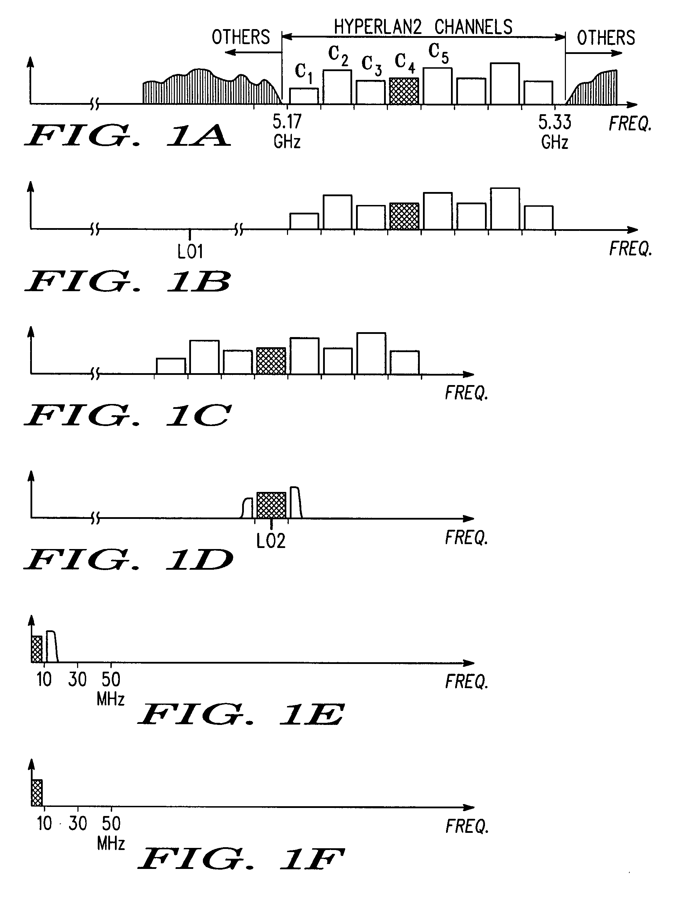

Typically HIPERLAN 2 operates at 5.5 GHz with multiple channels; each channel has 52 active sub-carriers within a 20 MHz bandwidth. OFDM modulation schemes require two component signals to be in phase quadrature. The two component signals are referred to as the I and Q signals. During operation, and following down conversion to a base-band signal, the base-band signal of interest has two 10 MHz side band signals, at which sub-carrier frequencies, the I and Q component signals lie. Figures 1a and 1b illustrate diagrammatically how close together the sub-carrier channels are one from another.

However, because only a relatively small frequency band separates adjacent sub-carrier channels, even small changes in component characteristics can cause variations in the overall behaviour of a device to signals. These changes, which may arise as a result of thermal drift, can give rise to, for example, variations in device characteristics. This in turn can cause cross-talk interference between adjacent sub-carriers. Typically a change in overall absolute tolerance of $\pm 16\%$ of passive components' value, prevents a filter from achieving the required -27dB stop band performance needed in HIPERLAN 2.

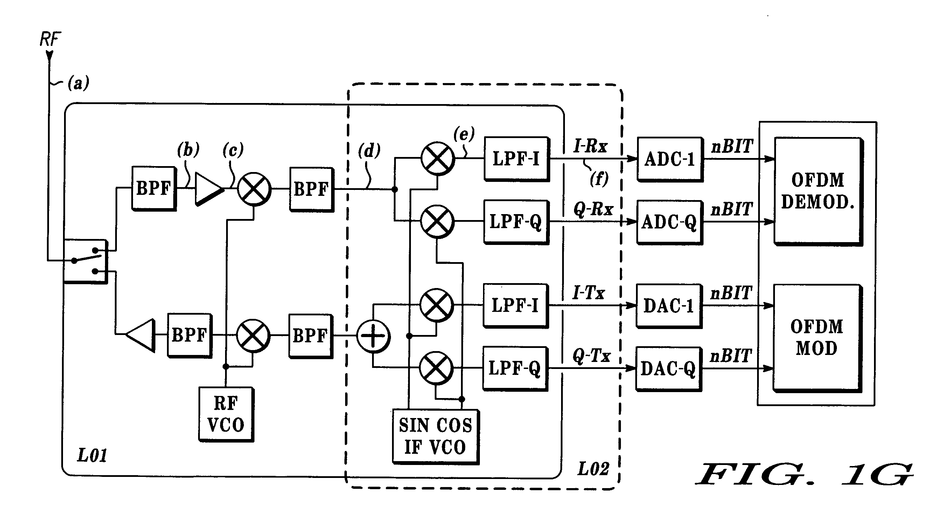

So as to assist in the understanding of the invention a basic description of Orthogonal Frequency Division Multiplexing (OFDM) is provided with reference to Figures 1 to 4. The time domain signal transmitted to an OFDM transceiver 10 consists of a sum of (K) sinusoidal waveforms of different amplitudes A(i) and phases $\phi(i)$. At transmission of the RF signal, digital information is mapped onto the (K) sub-carrier signals or sub-carriers. These signals are then transformed into time domain signals using Inverse Fast Fourier transform (IFFT). Denoting the sampling period T, the duration of the IFFT output block is $T_u = NT$ (where N>K). A cyclic extension of length $T_e$ can be added before the block, forming a symbol of duration denoted as $T_p = T_u + T_e$. The sample block is serialized and converted to an analog signal.

The sub-carrier spacing is $1/T_u$. The sub-carriers are of overlapping frequencies. However, the IFFT guarantees that data mapped on each frequency can be recovered independently from data carried on the (K-1) other sub-carriers by means of a Fast Fourier Transform (FFT) and that this has no influence on data content of other sub-carriers. This is a result of processing theory. Orthogonal Frequency Division Multiplexing exploits this principle. Hence OFDM ensures very efficient use of available bandwidth for a given data transmission speed.

A time domain signal (consisting of successive symbols) is converted from digital to analog and up-converted to an RF center frequency ($f_c$) using appropriate frequency shifts by way of frequency mixers (not shown). The RF signal is then transmitted through an appropriate medium. Thus, the OFDM signal contains (K) sub-carriers at frequencies $f_c + i/T_u$. A received RF signal ($R_{fc}$) is translated to a base band signal; converted from analog to a digital signal;

and then transformed to the frequency domain using Fast Fourier Transforms after having removed its cyclic extension. Information is recovered in the form A(i) and $\phi$(i). This information is then demapped into its basic elements in order to recover a transmitted digital bit stream.

The so-called front end 40 of a receiver down-converts a received signal (in the 5.15-5.725 GHz band) and provides base band information to the digital signal processor device. Conversion can be done in two steps, for example as in a standard heterodyne receiver which uses an appropriate intermediate frequency (IF). After the IF frequency there are two possibilities to convert the analog signal for transportation to analog-to-digital converters (ADC's) 57 and 58. These are: analog I-Q generation (base band); and down conversion to a second, low intermediate frequency (IF).

Analog I-Q generation requires mixing the IF signal using two mixers: one multiplies the signal with a sine function, thereby generating the I signal; and the other multiplies with a signal (of the same frequency) but phase shifted by 90 degrees, such as cosine function, in order to generate the Q signal. All analog treatment during and after this multiplication: such as base-band low pass filtering used for channel selectivity; mixing; amplification and analog to digital conversion; are thereafter subject to mismatch. Base-band low pass filtering is required to eliminate adjacent channels from interfering with the selected signal channel during analog-to-digital conversion.

These mismatches are due to slight differences in the values and behavior of active and passive elements found in I and the Q signal paths, even though great care is taken in the design and layout of these elements in a symmetrical way during the design of the system and/or circuit. Mismatches are even more pronounced when the aforementioned effects of thermal drift are taken into account.

One way of envisaging down conversion of the RF signal to base-band (I and Q signals) in the receiver, is to imagine that the original RF channel is 'folded in half' around the center frequency, such that the (I and Q) base-band signals have effectively half the bandwidth compared with the corresponding RF channel. In base band the original RF center frequency occurs at DC and sub-carriers that were symmetrically located to the left and right of the center frequency (in RF), following down conversion, the subcarriers effectively become superimposed onto each other, so that they occur in pairs on half the number (K/2) of sub-carrier frequencies in base-band. Only precisely matched I and Q signal generation and signal treatment throughout the processing chain, allows correct demodulation of the information to be performed by exact superimposition of sub-carriers. Any mismatch between I and Q signal paths, however small, results in cross-talk between the superimposed sub-carriers. Given the tolerances imposed, such cross-talk reduces the available bandwidth for data transmission and/or introduces unacceptable errors.

It will be appreciated that the same criteria apply for transmitter signal processing, however in reverse order.

The outcome of this mismatch is that the representation of A(i) and $\phi$(i), of the various sub-carriers may not be correct and can cause decoding errors of the base-band signal.

**Prior Art**

Many I/Q compensation techniques only deal with a mismatch which remains constant over the whole frequency band of the signal. For instance, in a system disclosed in US Patent US-A-5 263 196 (Motorola) the frequency-independent part of the mismatch is estimated and compensated in the time-domain. This method applies well to narrow band signals.

US Patents US-A-4 003 054 (Raytheon) and US-A-5 872 538 (Lockheed Martin) deal with frequency-domain processing of a training signal to estimate frequency-dependent I/Q mismatch. Both differ from the present invention in several respects. Firstly they operate in receive mode only as they are adapted for radar-processing; and secondly, neither makes reference to an estimation of the transmit I/Q mismatch, nor to any pre-compensation. Additionally the systems described send several training chirp signals, prior to input of signals to down conversion mixers.

Another difference is that compensation is applied to a narrow band signal which is transmitted on an unknown frequency, whereas in the present invention, the signal extends over a large set of known frequencies. In particular the arrangement described in US-A-4 003 054 requires generation of several training pulses or chirps used for calibration. The chirps are used to modulate a carrier signal, which in turn is then phase shifted in order to simulate a Doppler shifted signal. The simulated Doppler shifted signal is then applied to the quadrature detector which is being calibrated. Further processing of a plurality of signals is then required in order to derive a frequency spectrum of the simulated Doppler shift. Again substantial processing needs to be performed on the data in order to derive correction signals for each of the imbalances in the quadrature demodulated frequency components of the signals to be corrected. Therefore the amount of signal processing, as well as the processing capability required, is substantial.

An object of the present invention is to eliminate errors arising from mismatch characteristics of active and passive devices, by improving signal mismatch compensation, particularly in OFDM devices and associated systems.

**Summary of the Invention**

According to a first aspect of the present invention there is provided an apparatus for improving signal mismatch compensation, the signal mismatch occurs between first and second RF signals, the apparatus comprising : at least one switch which applies a first RF signal, present on a first pathway, and a second RF signal, present on a second pathway, to respective first and second frequency mixers, during a first time period; the mixers providing a first pair of mixed first and second RF signals; means for reversing the at least one switch, during a subsequent time period, so that the first RF signal is applied to the second mixer, via the second pathway, and the second RF signal is applied to the first mixer, via the first pathway; the mixers thereby provide a second pair of mixed first and second RF signals; monitoring means provided to monitor respective first and second pairs of mixed RF signals during an interval, said interval comprising a plurality of sequential time periods; the monitoring means providing time averaged values for the first and second signals in each of said first and second pairs of RF signals, so that effects of signal mismatch on the first and second RF signals are minimised in each channel, by subjecting said RF signals in each channel, for substantially the same time, to the same pathways.

The first and second signals are orthogonal one to another and may be encoded quadrature components of an OFDM signal.

Frequency mixing is advantageously performed at a baseband frequency, typically around 20 MHz, because lower sampling rates are required for processing and processors and samplers which operate around this frequency band, tend to be relatively cheap. Down conversion from an intermediate to a base-band (prior to mixing preserves the digital data) is preferably achieved by multiplication with a scale factor.

Preferably two switches are provided, each for the respective first and second channels. Switching may be controlled by way of a micro-processor and is advantageously achieved using a device which includes at least one flip-flop associated with each channel which receives either of said first or second RF signals.

A signal mismatch compensator may be incorporated in an adaptive Radio Frequency (RF) filter for filtering first and second RF signals from an OFDM encoded carrier signal. An example of such an adaptive RF filter is described and claimed in the current Assignee's Patent Application, of even filing date, entitled: An Adaptive Filter.

In OFDM transceivers, basically two types of analog signal transfer, can be undertaken between the analog transceiver section and the digital transceiver section. In a first method, an analog signal is transported on a low intermediate frequency (IF), for example 20 MHz. In this case each of the OFDM sub-carriers is assigned its own specific frequency. The procedure is also called Intermediate Frequency (IF) sampling. Between analog and digital transceiver sections, the procedure requires one signal path for reception (one ADC) and one signal path for transmission (one DAC).

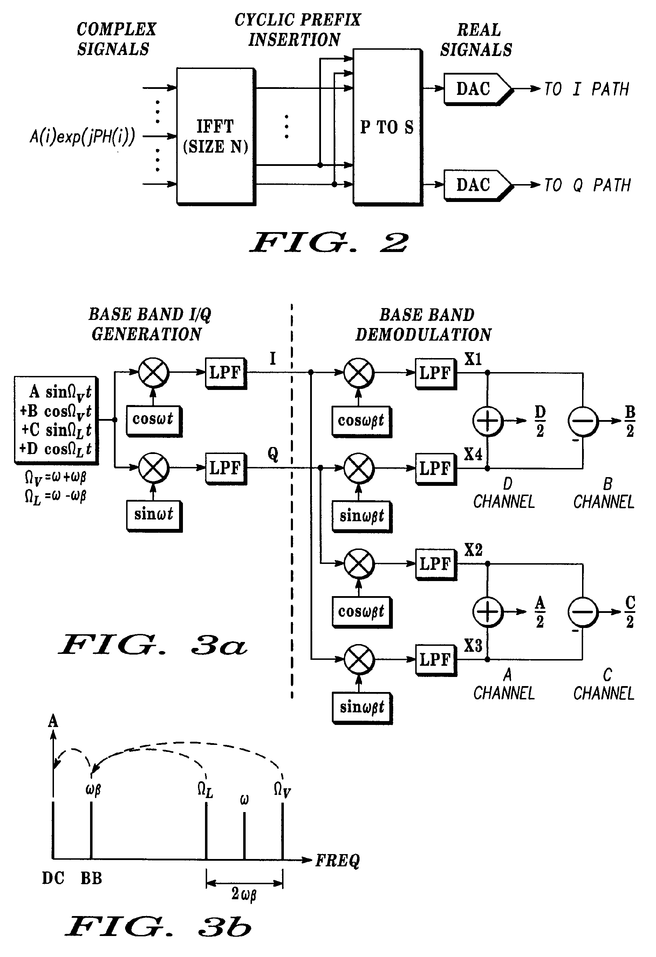

The second of these is illustrated for purposes of assisting better understanding of the invention, in Figure 3. In the second method the analog signal is transported in a base-band signal. In this case the OFDM center frequency is at zero Hertz (Hz) and the sub-carriers are symmetrically spaced left and right from the center. Therefore in RF terms they have to 'share' the same carrier frequency in base band. These two base band signals are referred to as I and Q signals. They are usually represented as direct and quadrature components of a complex signal. Both I and Q signals are required to transport the complete information. The procedure is also called base-band sampling.

According to a second aspect of the invention there is provided a method of signal mismatch compensation comprising: applying a first training signal, of known characteristics, to a circuit which includes at least one filter, receiving a filtered training signal, from the circuit, deriving a transfer function from the received filtered signal; obtaining the inverse transfer function and applying the inverse transfer function to a subsequently received signal in order to correct any signal mismatch in the subsequently received signal.

Transmit and receive filters may be combined to form a single set of filters which may be used in both transmit and receive modes, in conjunction with one or more multiplexers. This enables the invention to be used in both half and full-duplex modes. An advantage of this is that compensation training is performed only once and post compensation parameters for receive, as well as precompensation parameters for transmit, are the same. Transmit and receive paths are preferably selected by multiplexers before and after filters are switched to receive or transmit instants of the protocol from a base-band DSP.

This second aspect of the invention requires two signal paths for reception, using two Analog to Digital Converters (ADCs); and two signal paths for transmission, using two Digital to Analog Converters (DACs), between the analog and digital transceiver sections. Since in this second aspect, RF signals are transported within half the available OFDM channel bandwidth; signals can be sampled (converted) and processed, with relatively little power consumption. Therefore under particular circumstances, and when applied to some components, (for example filters) it may be more efficient to employ the second aspect of the invention.

Means may be provided for generating a test or training signal digitally and sending a time domain sample of the test or training signal to a DAC and subsequently to an RF transceiver in a test mode. This may be achieved by routing the test signal through the I and Q paths of the transmit chain, or routing the test signal through the I and Q paths of the receive chain. This digitally generated test or training signal is advantageously used to compensate frequency mismatch in filters. The aforementioned first aspect of the invention is particularly well suited for use with switches and mixers.

Another advantage of the second aspect of the invention is that it has no image channel at down conversion to base-band at reception. The second method however is more difficult to implement for OFDM because it demands high quality matching between the I and Q signal paths, in order to avoid signal impairment.

An OFDM transceiver with analog I/Q generation may be envisaged as comprising signal treatment blocks that are essentially down converters, I/Q generators, analog/digital converters (ADC) and digital signal processors (DSP's) for the receive path; digital/analog converters (DAC's); I/Q summation means; and up mixers, for the transmit path. The expressions Digital Signal Processor (DSP's) and base-band controller are used synonymously throughout the present Application.

It will be appreciated that DSP architecture may vary from a dedicated state machine to a generic software driven processor.

Preferred embodiments of the Invention will now be described, by way of example only, and with a reference to the Figures, in which:

**Brief Description of Figures**

Figures 1(a)-1(f) show diagrammatical representations of key processing stages performed on a received analog RF signal, in a HIPERLAN 2 receiver;

Figure 1(g) is a block diagram of a HIPERLAN 2 transceiver system, showing diagrammatically each processing stage of the signals shown in Figures 1(a) to 1(f);

Figure 2 illustrates schematically OFDM modulation;

Figure 3 is a diagrammatical representation of separation of I and Q signals and demodulation of two base-band signals;

Figure 4 is a Table of Equations which model the two sub-carriers shown in Figure 3;

Figure 5 is a block diagram showing an example of a demodulation scheme for base-band I and Q signals;

Figure 6 is a Table of Equations which describe demodulation in a mixer or oscillator suffering from cross-talk;

Figure 7 is a circuit suitable for first order sub-carrier cross talk compensation;

Figures 8 and 9 depict signal paths for compensating respectively Filter pairs F3 and F4 and F5 and F6;

Figures 10 and 11 show principles of signal chopping;

Figure 12 shows in graphical form a chopped mixer/oscillator signal

Figure 13 is a Table of Equations which describe demodulation in a mixer or oscillator with cross-talk compensation;

Figure 14 is a graph of base-band low pass filter characteristics;

Figure 15 is a graph showing transmit filter mismatch characteristics;

Figure 16 is a graph showing receive filter mismatch characteristics;

Figure 17 is a constellation diagram showing simulated received QPSK signals without filter mismatch compensation;

Figure 18 is a constellation diagram showing simulated received QPSK signals with filter mismatch compensation;

Figure 19 is a block diagram of a conventional I/Q low pass filter system;

Figure 20 is a block diagram illustrating the principle of base-band low pass filtering in a HIPERLAN 2 transceiver;

Figure 21 shows a functional diagram of a signal path for pre and post compensation in filters in a HIPERLAN 2 transceiver; and

Figures 22-25 show functional diagrams of mixer compensation in a HIPERLAN 2 transceiver.

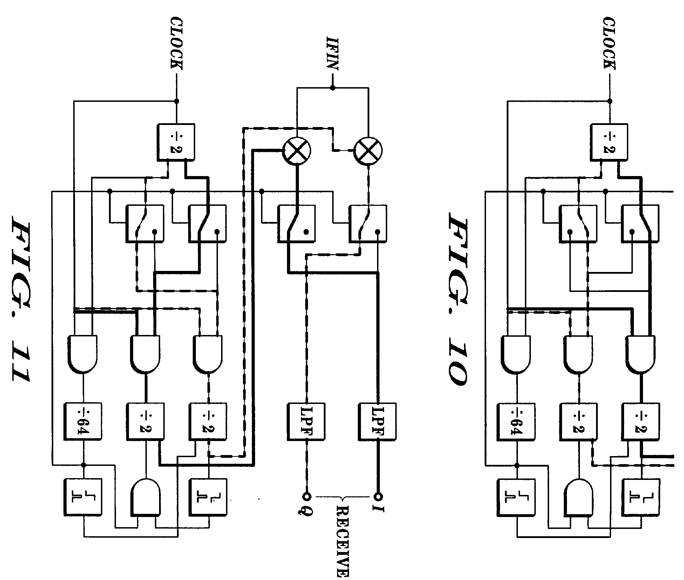

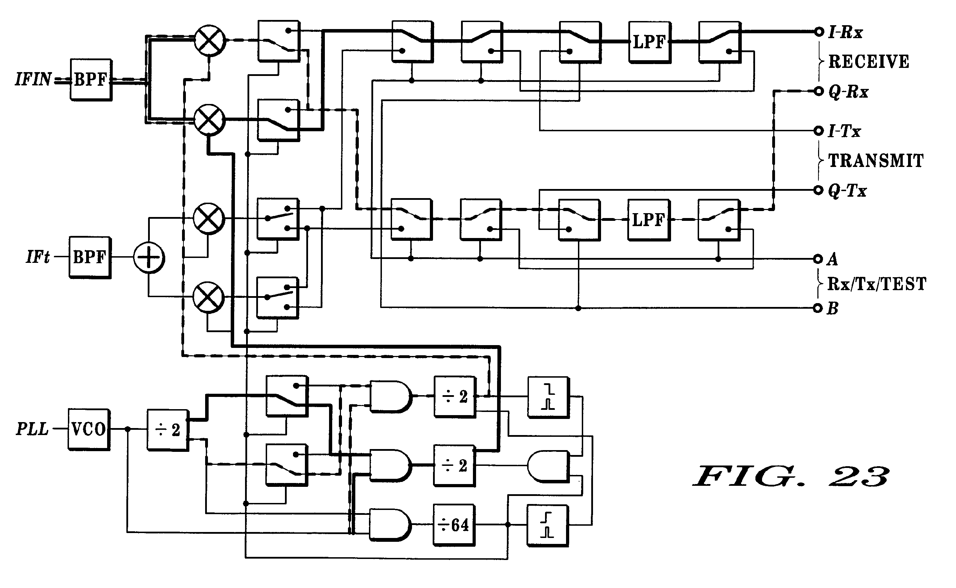

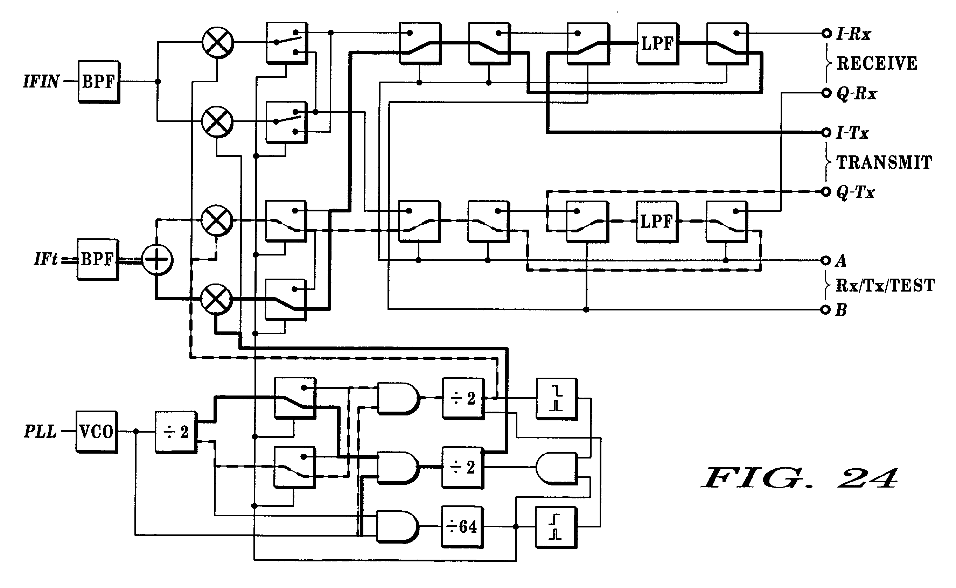

First and second aspects of the invention are described with particular reference to Figures 10, 11 and 21-24 (for the first aspect of the invention) and 7, 8 and 9 (for the second aspect of the invention).

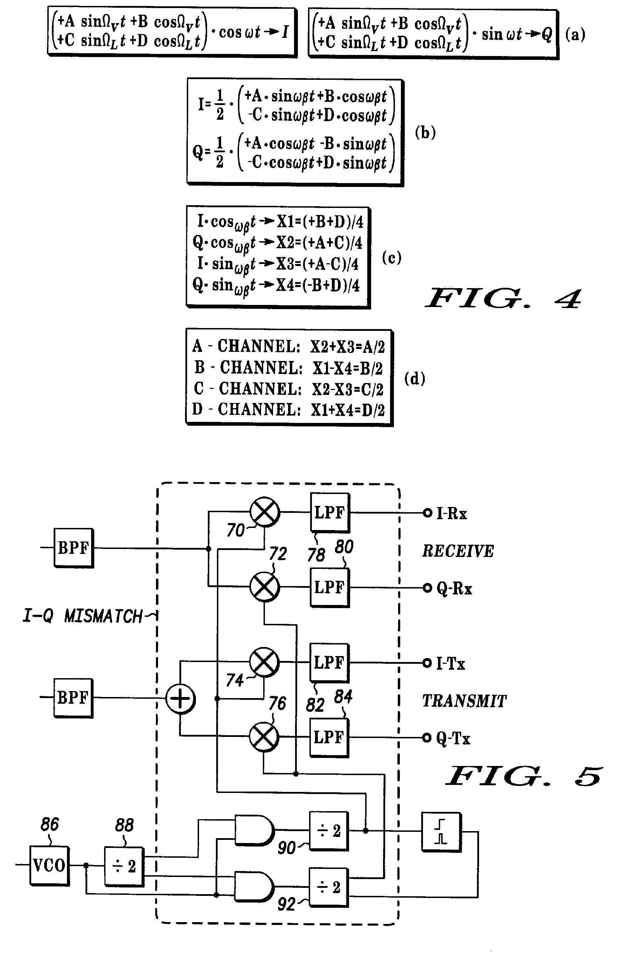

Referring to the Figures, and specifically Figures 1 and 3, and the Table in Figure 4, Figure 3 shows a simple analog model of I/Q signal flow from input signal to decoded data. The left hand side of Figure 3 represents the conversion from IF to base band (I and Q). The IF input signal is written in Cartesian components of two frequencies that are equally spaced left and right of the center frequency. The right hand side of Figure 3 represents digital signal processing of a base band signal to final "recovered" digital data. Four independent data channels A, B, C and D are recovered as sums and differences of four intermediate signals (called X1, X2, X3, X4 in Figure 3). Channels A, B, C and D carry information from both sub-carriers, shown superimposed in Figure 1f.

To the left of the dotted line in Figure 3 there is shown in diagrammatical form a frequency translation from IF to base band (BB) to final data components (DC). The table in Figure 4 shows the equations modeling this, for an ideal case, where no mismatches are present.

In a demodulation system working with analog I and Q signals, it is apparent that signal mismatches reside in the analog stage(s) of the signal processing. The analog to digital (receiver) and digital to analog (transmitter) conversion stages, and the digital signal processing are usually of much higher precision and matching than the analog signal processing.

Figure 5 shows in block form an example circuit for generating I and Q signals in analog. In order to avoid frequency mismatch it is essential that the following components are matched: Mixers 70 with mixer 72 and mixer 74 with mixer 76. Also filters 78 and 80 need to be matched and filters 82 and 84; as well as input characteristics of summation inputs SU1-SU2; and dividers DIV1 and DIV2. However, as stated before this is not practical as drift and thermal effects alter characteristics of the components.

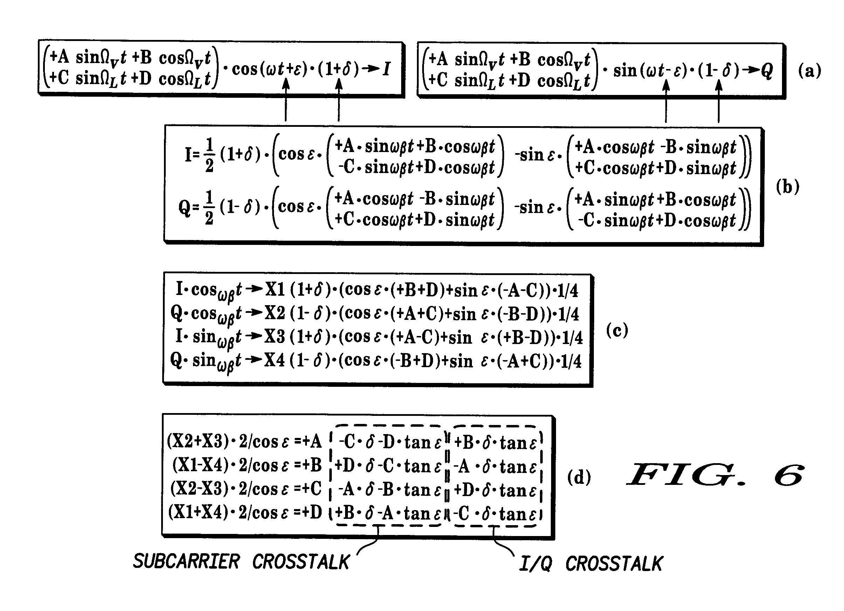

The generation of the I and Q phases is controlled by a clock signal provided by a Voltage Controlled Oscillator 86, gates G1-G2 and dividers 88, 90 and 92. The table in Figure 6 shows equations (taking into account timing and amplitude mismatches) of a local oscillator I and Q-phases for outputs from mixers, for example of the type shown in Figure 3. It can be seen that a major source of impairment is as a result of cross-talk between superimposing sub-carriers. This cross-talk interference is shown in the Equations in Figure 6 as comprising two terms: the first arising as sub-carrier cross-talk and the second as I/Q cross-talk.

In order to solve the I/Q mismatch problems, which gives rise to the I/Q cross-talk, a system architecture is proposed and is shown in Figures 10 and 11. The system architecture comprises RF front end block, ADC/DAC converters and a digital base band signal processing block. I-Q mismatch compensation is achieved in two independent steps. Firstly there is correction of Low Pass filter mismatches. This is preferably performed under digital control from a base band processor by a measurement and compensation procedure. Secondly there is correction of mixer and oscillator mismatches. This is achieved by additional hardware at the analog section of the transceiver.

It is evident that both these stages have a cumulative effect on the transceiver performance. However, it will be appreciated that either may be used separately and this depends upon processing techniques and other conditions.

The first and second compensation methods have cumulative improvement on mismatch compensation. The methods are: mixer and local oscillator mismatch compensation and I and Q filter mismatch compensation.

In the case of digital I-Q mismatch or separation, the base-band signal is in digital form (after analog to digital conversion) and is then fed to a digital signal processor 100 (DSP) which in turn creates the necessary I and Q signals using appropriate digital signal processing. There are no imperfections related to component mismatches in the digital domain. Only quantisation noise (due to the digital number representation) can cause deleterious effects.

The advantages of this method are: it is able to determine the necessary compensation for transmit and receive paths independently. Compensation is achieved without any up conversion. Furthermore compensation may be carried out without any signal transmission. This is known as offline compensation and has clear advantages.

No factory setup of compensation parameters is needed. That is the compensation can be done at power-on of the system and over and over again in time and adapted to changes such as temperature. No factory trimming of the product is needed resulting in higher yields. In case of preferred embodiment; lower cost; lower power; lower complexity in design; one set of parameters and only one training cycle is required instead of two.

It allows analog I/Q generation with high precision required for high performance OFDM system like HIPERLAN 2. It also provides an OFDM system architecture with low power consumption.

Mixer amplitude and phase mismatch compensation will now be described with reference to figures 10 and 11.

A chopping mechanism is obtained within the transceiver whereby the I path signal is regularly obtained by the use of multiplexing (chopping) both mixers M3 and M4 multiplexed in time for a given channel. Mixer clock speed (DO1 or DO2) is arranged to be much higher than the chopping speed. This method equalizes mismatches in the mixers 13 and 14. The side effects of the chopping namely high frequency undesirable components, are filtered out by low pass filters 110 and 112.

Mixers M3 and M4 are driven by two clock sources which are multiplexed (chopped) as by a direct clock source and quadrature clock source. The outputs of the two mixers M3 and M4 are directed to I and Q paths using multiplexers such that the mixer which receives the direct mixer clock source is alawyas directed to the I channel, and similarly, the Q path is always obtained from the mixer which is mixing with the quadrature clock source. Multiplexers S1, S2, S3 and S4 work in synchronism to guarantee this.

A chopping mechanism is created within the transceiver whereby clock sources (DO1 and DO2) for mixers M3 and M4 are obtained by multiplexing (chopping) both clock source generating elements (DIV1 and DIV2). This ensures that mismatch in phase of the sources can be equalized. Side effects of chopping, namely high frequency undesirable components, are eliminated by low pass filters F3 and F4. The chopping frequency (SWI) is much less than the frequency delivered by sources (DO1 and DO2).

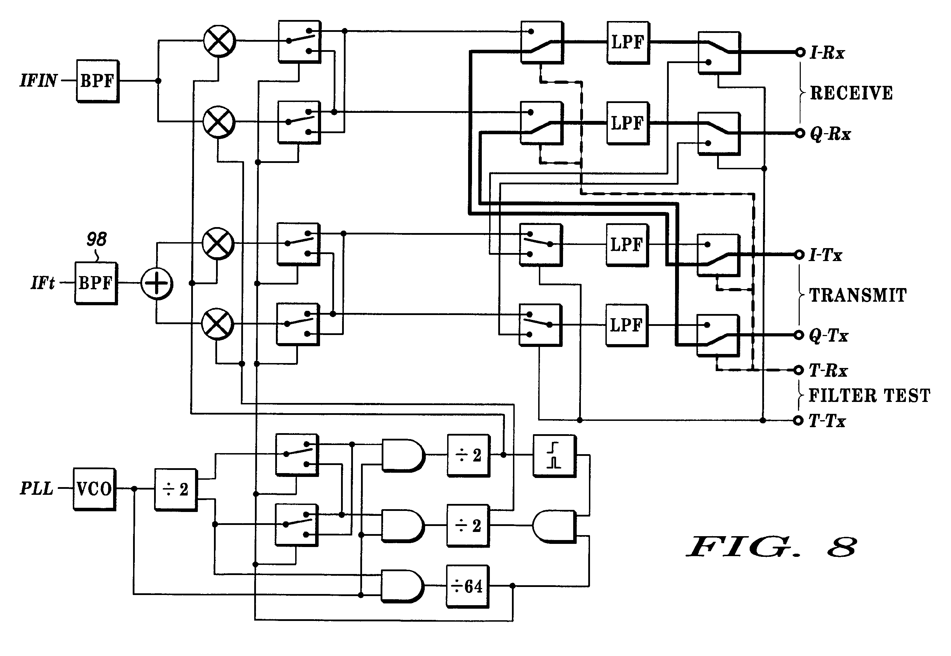

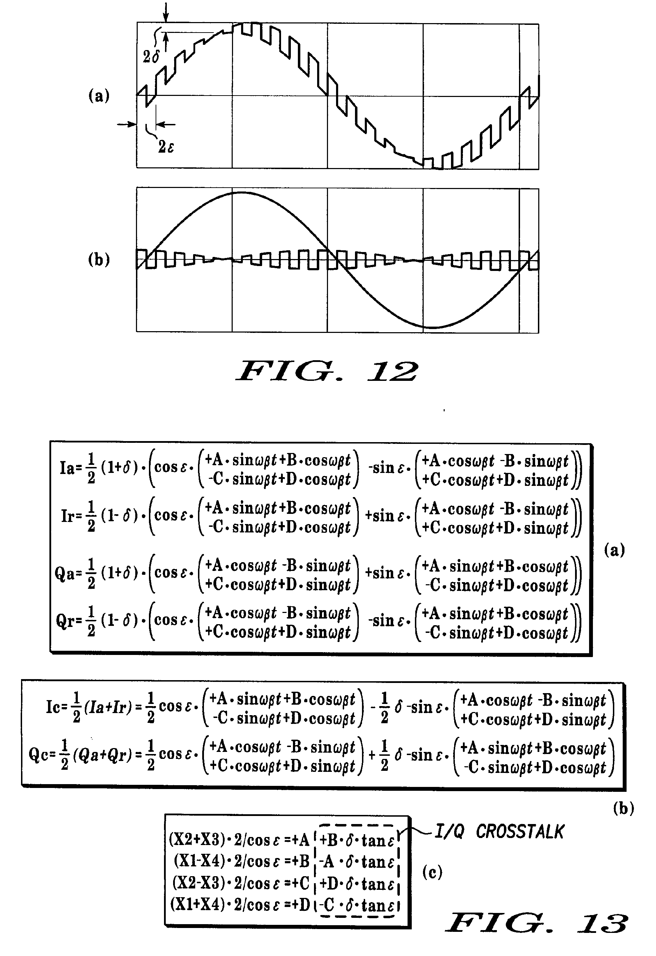

Figure 12 illustrates the result of the chopping procedure for one sub-carrier at reception. The channel mismatch occurring as a superimposed chopping frequency on the I and Q signals is filtered by base band filters 110 and 112 in the reception path in the same way as the signals are filtered by band pass filter 98 in the transmission path shown in Figure 8. During chopping the I and Q signals are switched between two physical paths that subject the signals to different properties, such as gain and delay. For ease of reference the resulting signals are suffixed "a" ( for received signals Ia and Qa ) and "r" resulting in Ir (Qr) in Figure 12. The equalized signals called Ic and Qc in Figure 12 are modelled as taking the average of both paths. The equations for this model are shown in Figure 13. When comparing the results with Figure 6 it can be seen that sub-carrier cross-talk has been removed. The remaining already negligible I/Q cross-talk is compensated by system equalization procedure in the OFDM system .

The advantages of this method are: compensation is achieved without any signal that needs to be transmitted (offline compensation). There is no involvement of the DSP, thus the method is less burdensome on processing power. Implementation of the method is straightforward and no factory trimming is needed. Additionally any high frequency components generated during chopping (multiplexing) are filtered out by the low pass filters (reception) and the band pass filters (transmission) which are part of the system. All I/Q path mismatches (except the low pass filters) are eliminated, thus the filter compensation procedure (which is controlled by the baseband block) can be exploited to its full potential .

The training signal (St) is generated in the DSP. It is a time domain signal including at least one symbol. It can be either stored as a set of time domain samples or obtained by OFDM modulation of a plurality of stored frequency domain components.

In a preferred embodiment (St) may comprise of a single packet of duration $T_p$, corresponding to the OFDM modulation of K/2 non-zero components D(1) to D(K/2) such that A(i)=1, $\phi$(i)=0, and thus D(i)=1 for all (i) from 1 to K/ 2. D(i)=A(i) $e^{j\phi(i)}$ is mapped on sub-carriers of frequency ($f_c$+i/$T_u$).

After insertion of a cyclic extension, I and Q components are obtained and can be used to train either the transmit or the receive path as described below.

Digital Signal Processing for receive path Filter compensation is described with reference to Figure 8.

The aim of the receiver training structure is to feed in-phase (I) component of the training signal into the I path of the receiver and the quadrature (Q) component of the training signal, into the Q path of the receiver. Therefore, in the embodiment of Figure 8, the in-phase component of the training signal successively goes through switches S13, S7 and S11 while the quadrature component of the training signal is going through switches S14, S8 and S12. However, an alternative path for the Q component (not depicted) may be S13, S8 and S12. The advantage of the first embodiment is that the I and Q training components can be transmitted and received simultaneously. An advantage of the alternative embodiment is that the I and Q training components are transmitted through the same analog to digital converter.

The received training signal is thereafter demodulated by the OFDM demodulator in order to recover each packet with frequency components R(i) corresponding to D(i). At the output of the Fast Fourier Transform (FFT), the sub-carriers are grouped by pairs (R(i), R(-i)) and processed separately.

There are two implementations:

In the first preferred embodiment, there are K/2 pairs of cross-talk coefficients:

(a(i),b(i))= (R(i),R(-i)*) for all (i) from 1 to K/2, where * denotes complex conjugation.

A compensation matrix $M_R$(i) is obtained for each pair of sub-carriers. This matrix is a real valued matrix of size (4,4) and is obtained by inverting the cross-talk matrix.

In the preferred embodiment, matrix $M_R$(i) is the following:

$$M_R(i) = inv \begin{pmatrix} \Re(a(i)) & -\Im(a(i)) & \Re(b(i)) & \Im(b(i)) \\ \Im(a(i)) & \Re(a(i)) & \Im(b(i)) & -\Re(b(i)) \\ \Re(b(i)) & -\Im(b(i)) & \Re(a(i)) & \Im(a(i)) \\ -\Im(b(i)) & -\Re(b(i)) & -\Im(a(i)) & \Re(a(i)) \end{pmatrix}$$

After the estimation has been performed, each received data packet can be compensated after the FFT by multiplying each pair (R(i),R(-i)) of sub-carriers by $M_R(i)$ to obtain a pair of mismatch compensated sub-carriers ($R_c(i)$, $R_c(-i)$) in the following manner:

$$\begin{pmatrix} \Re(Rc(i)) \\ \Im(Rc(i)) \\ \Re(Rc(-i)) \\ \Im(Rc(-i)) \end{pmatrix} = M_R(i) \begin{pmatrix} \Re(R(i)) \\ \Im(R(i)) \\ \Re(R(-i)) \\ \Im(R(-i)) \end{pmatrix}$$

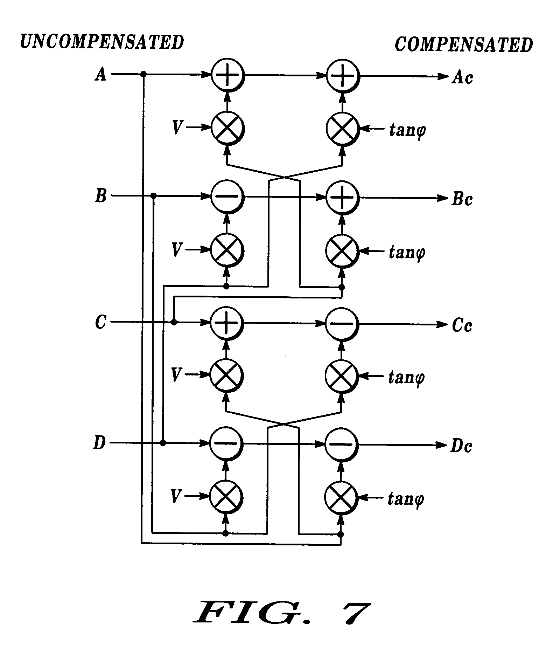

A simplified compensation scheme is shown in Figure 7 (for a pair of sub-carriers). This scheme is less computational and is based on first order cross-talk compensation. For a given pair of sub-carriers of index i and -i, it only requires the storage of two (real valued) cross-talk parameters $v(i)$ and $\tan(\varphi(i))$, where $v$ and $\varphi$ are respectively half the amplitude mismatch and half the phase mismatch between the I and Q receive filters.

Keeping the notations of the section, for a given pair of sub-carriers, the parameters $v(i)$ and $\tan(\varphi(i))$ are obtained by obtaining the product of receive filter complex gain by the cross-talk on the sub-carrier of index -I; deriving the receive filter complex gain only on sub-carrier of index I; removing the gain from sub-carrier -i (so that only the cross-talk remains and finally, taking the real and imaginary part of the result to obtain $v(i)$ and $\tan(\varphi(i))$, which are respectively the amplitude and phase mismatch of the filter. This is summarized by the following complex operations:

$$v(i) = \Re\left( \frac{R(-i)}{R^*(i)} \right)$$

and

$$\tan[\varphi(i)] = -\Im\left( \frac{R(-i)}{R^*(i)} \right)$$

where * denotes the complex conjugation.

The compensation is performed by a linear combination of real and imaginary components of each pair of received symbols R(i) and R(-i).

With the notations:

$A = -\Im(R(i))$ ; $B = \Re(R(i))$ ; $C = -\Im(R(-i))$ ; $D = \Re(R(-i))$

the compensated versions $A_c$ ; $B_c$ ; $C_c$ ; $D_c$ are obtained as described in figure 7 by:

$$A_c = A + Cv(i) + D\tan(\varphi(i))$$

$$B_c = B - Dv(i) + C \tan(\varphi(i))$$

$$C_c = C + Av(I) - B \tan(\varphi(I))$$

$$D_c = D - Bv(i) - A \tan(\varphi(i))$$

Digital Signal Processing for transmit path Filter precompensation is now explained.

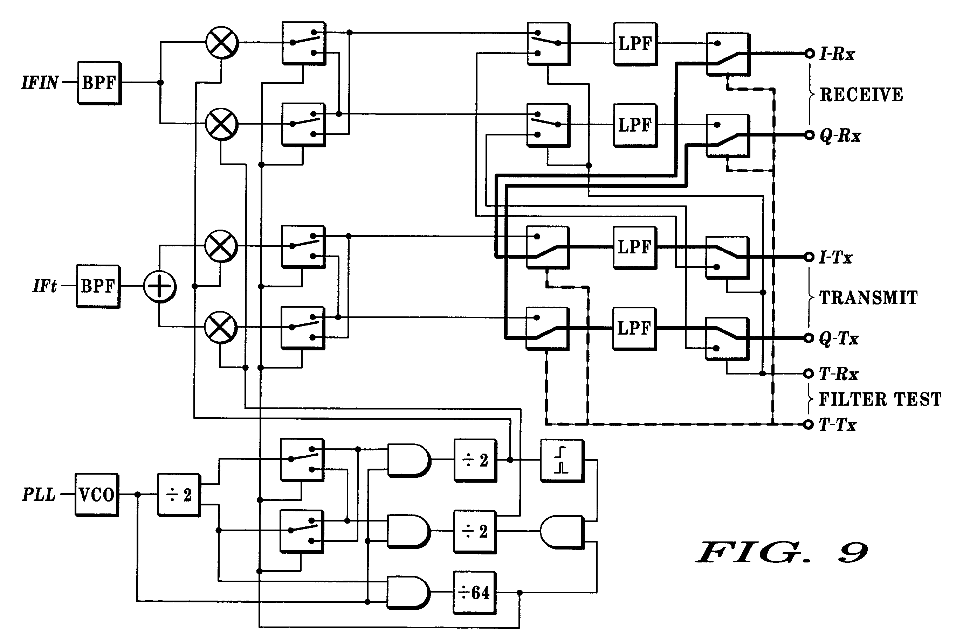

The aim of the transmitter training structure is to feed the in-phase (I) component of the training signal into the I path of the transmitter and the quadrature (Q) component of the training signal into the Q path of the transmitter. Therefore, in Figure 9, the in-phase component of the training signal successively passes through switches S13, S9 and S11, while the quadrature component of the training signal passes through switches S14, S10 and S12. However, an alternative path for the Q component (not depicted) is: S14, S10 and S11. The advantage of the first embodiment is that the I and Q training components can be transmitted and received simultaneously. The advantage of the alternative is that the I and Q training components are transmitted through the same analog to digital converter.

The received training signal is thereafter demodulated by the OFDM demodulator in order to recover each packet with frequency components T(i) corresponding to D(i).

At the output of the FFT, the sub-carriers are grouped by pairs (T(i),T(-i)) and processed separately.

Then there can be two implementations:

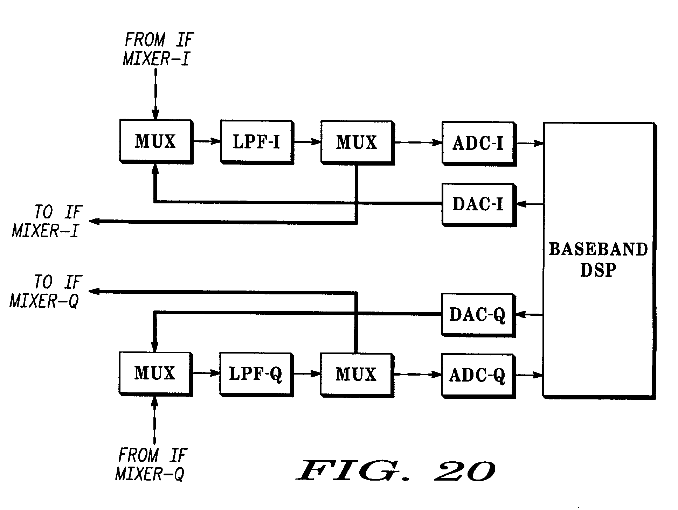

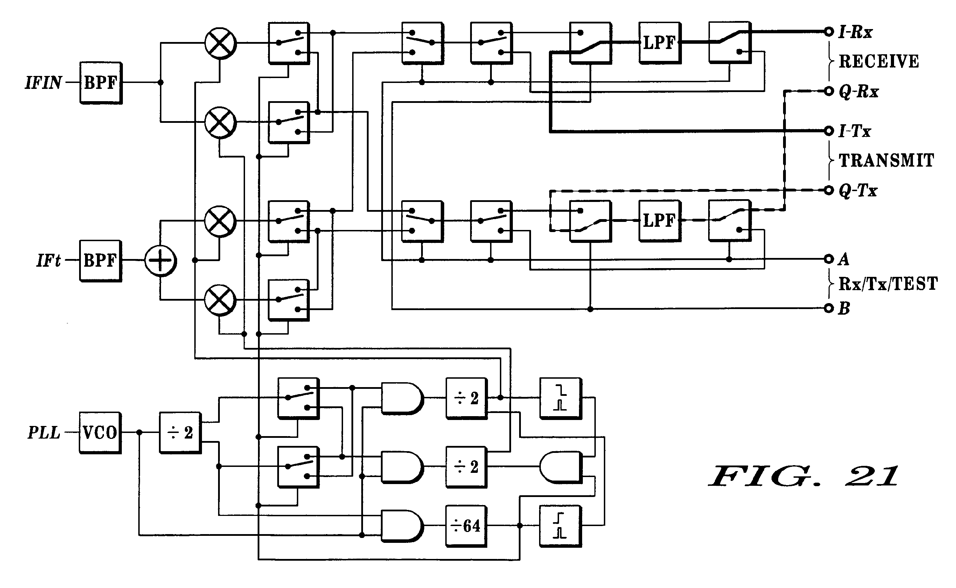

In the preferred embodiment (see Figure 20 and 21), there are K/2 pairs of cross-talk coefficients: (c(i),d(i)) = (T(i),T(-i)*) for all i equal 1 to K/2, where * denotes complex conjugation.

Finally a compensation matrix $M_T(i)$ is obtained for each pair of sub-carriers. This matrix is a real valued matrix of size (4,4) and is obtained by inverting the cross-talk matrix.

In the preferred embodiment, matrix $M_T(i)$ is the following:

$$M_T(i) = inv \begin{pmatrix} \Re(c(i)) & -\Im(c(i)) & \Re(d(i)) & \Im(d(i)) \\ \Im(c(i)) & \Re(c(i)) & \Im(d(i)) & -\Re(d(i)) \\ \Re(d(i)) & -\Im(d(i)) & \Re(c(i)) & \Im(c(i)) \\ -\Im(d(i)) & -\Re(d(i)) & -\Im(c(i)) & \Re(c(i)) \end{pmatrix}$$

After the estimation has been performed, each data packet to be transmitted can be pre-compensated before the IFFT by multiplying each pair (T(i),T(-i)) of sub-carriers by $M_T(i)$ to obtain a pair of mismatch compensated sub-carriers ($T_c(i)$, $T_c(-i)$) in the following manner:

$$\begin{pmatrix} \Re(Tc(i)) \\ \Im(Tc(i)) \\ \Re(Tc(-i)) \\ \Im(Tc(-i)) \end{pmatrix} = M_T(i) \begin{pmatrix} \Re(T(i)) \\ \Im(T(i)) \\ \Re(T(-i)) \\ \Im(T(-i)) \end{pmatrix}$$

A simplified compensation scheme is shown in Figure 7 (for a pair of sub-carriers). This scheme is less computational and is based on first order cross-talk compensation. For a given pair of sub-carriers of index i and -i, it only requires the storage of two (real valued) cross-talk parameters $v(i)$ and $\tan(\varphi(i))$, where $v$ and $\varphi$ are respectively half the amplitude mismatch and half the phase mismatch between the I and Q transmit filters.

Keeping the notations of the section, for a given pair of sub-carriers, the parameters $v(i)$ and $\tan(\varphi(i))$ are obtained by obtaining the product of transmit filter complex gain by the cross-talk on the sub-carrier of index -I; deriving the transmit filter complex gain only on sub-carrier of index I; removing the gain from sub-carrier -i so that only the cross-talk remains and finally taking the real and imaginary part of the result to obtain $v(i)$ and $\tan(\varphi(i))$. This is summarized by the following complex operations:

$$v(i) = \Re\left(\frac{T(-i)}{T^*(i)}\right)$$

and

$$\tan[\varphi(i)] = -\Im\left(\frac{T(-i)}{T^*(i)}\right)$$

where * denotes the complex conjugation.

The compensation is performed by a linear combination of real and imaginary components of each pair of transmitted symbols R(i) and R(-i).

With the notations:

$A = -\Im(T(i))$ ; $B = \Re(T(i))$ ; $C = -\Im(T(-i))$ ; $D = \Re(T(-i))$

the pre-compensated versions $A_c$ ; $B_c$ ; $C_c$ ; $D_c$ are obtained as described in Figure 7 by:

$$A_c = A + Cv(i) + D\tan(\varphi(i))$$

$$B_c = B - Dv(i) + C\tan(\varphi(i))$$

$$C_c = C + Av(i) - B\tan(\varphi(i))$$

$$D_c = D - Bv(i) - A\tan(\varphi(i))$$

Simulation of I/Q mismatch compensation/precompensation for HIPERLAN/2

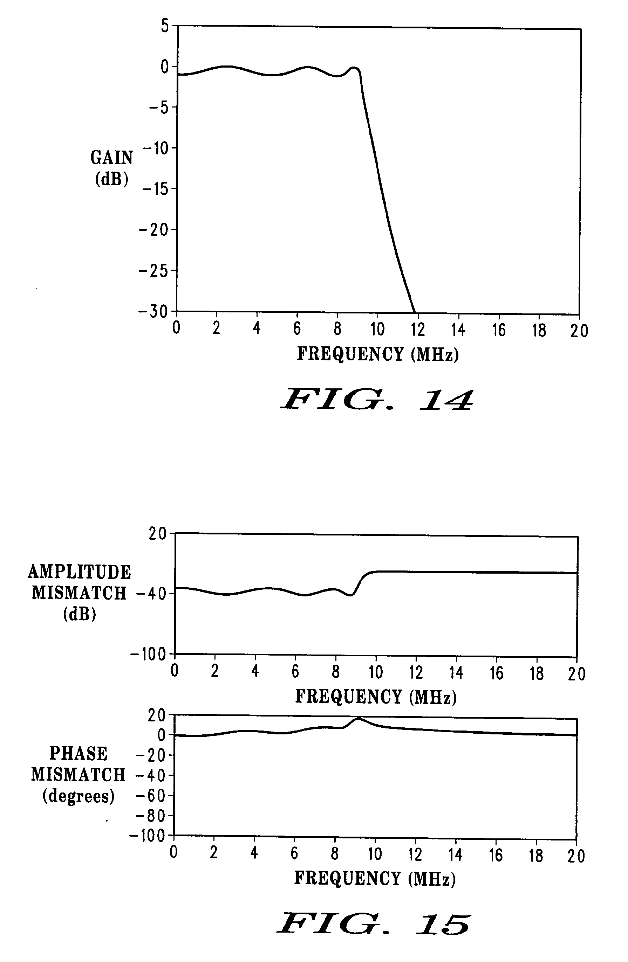

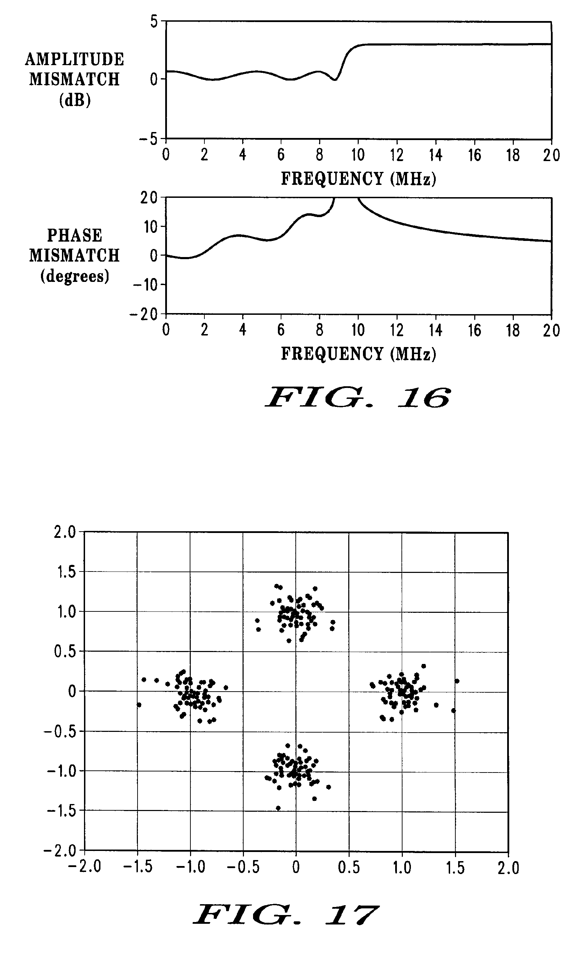

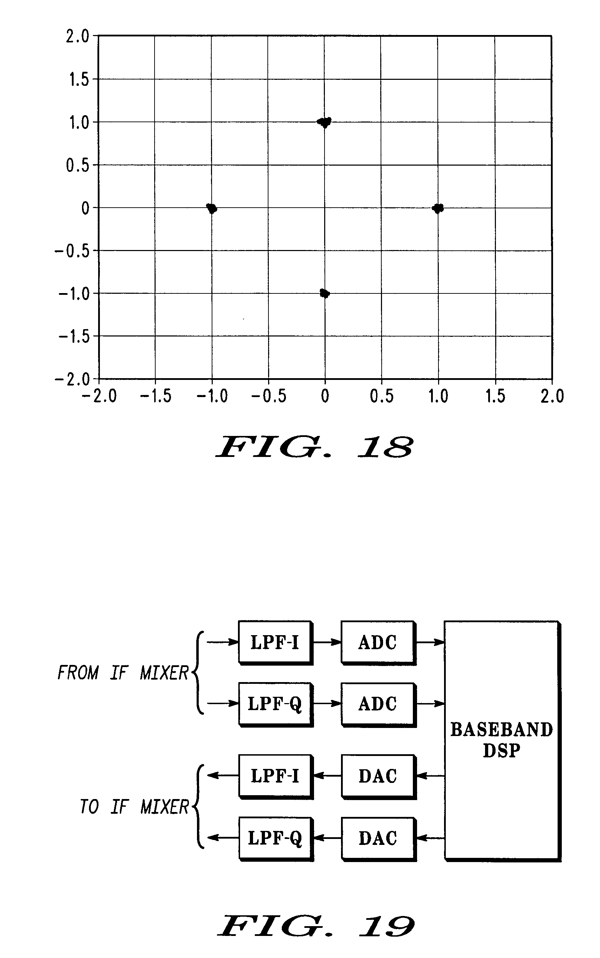

The HIPERLAN/2 system parameters are K=52 and N=64, the center frequencies are separated by 20 MHz. On Figure.14, a typical base-band low-pass channel selectivity filter (LPF) is represented. In the simulation, we introduce a mismatch of the transmitter LPFs and a mismatch of the receiver LPFs, which is represented on Figures 15 and 16. In QPSK mode, when the mismatch is not compensated, the received constellation after channel compensation and with negligible noise is represented on Figure.17 and the rms vector error is -15.5 dB. When transmit precompensation and receive compensation are applied, the constellation is represented on Figure.18 and the rms vector error is -36 dB. Therefore, thanks to compensation and precompensation techniques, analog I-Q can be used to get transmission modes requiring more than 30 dB signal to noise ratio.

In the case of Hiperlan 2 protocol, the transmission is TDD (time domain duplex); in other words half-duplex. In such an environment, transmit and receive filters do not require to be carrying signals simultaneously. This feature allows the possibility of multiplexing the receive and transmit filters since the characteristics of these filters are the same independent of signal direction.

Hence as shown in Figures.20 and 21 (compare with Figure.19), it is possible to multiplex the input and output signal paths from one set of I-Q low pass filters using a set of multiplexers such that the information flow is directed to the correct destination.

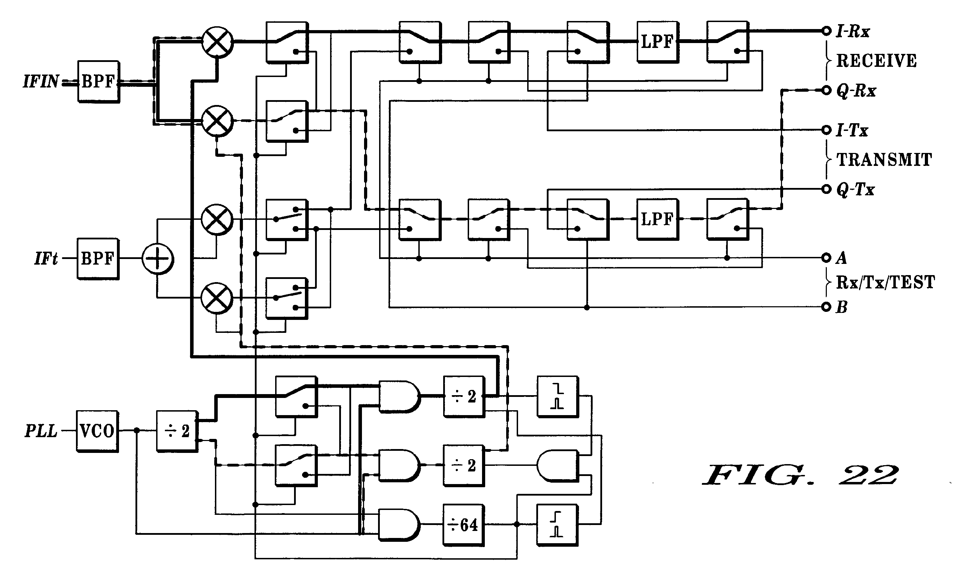

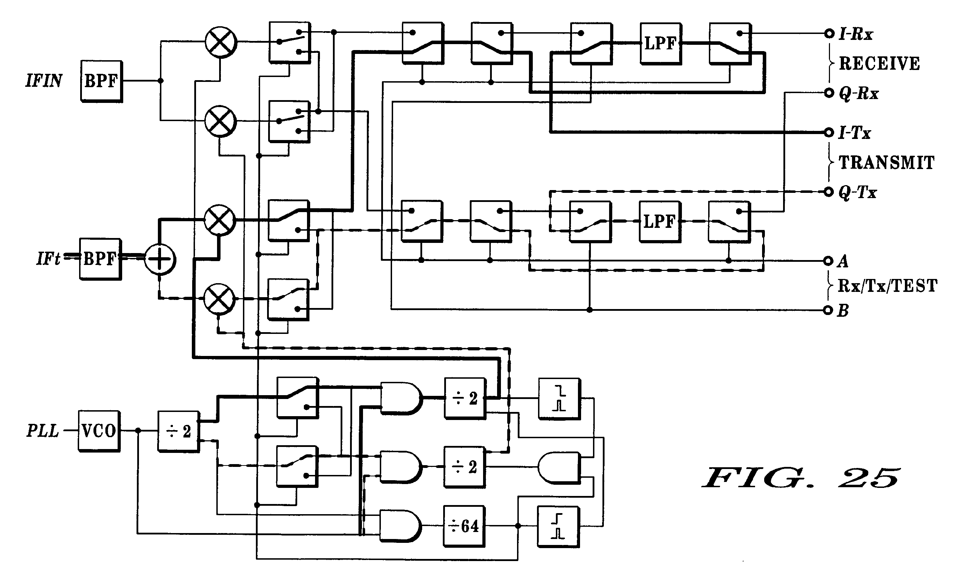

A major advantage of this scheme is that besides less hardware and power consumption, there is only one set of digital compensation parameters to be stored. This removes the need to train the transmit filters and then the receive filters. Figures 22 to 25 show how the multiplexed base-band filter paths of the preferred embodiment work together with the mixer/oscillator equalization paths.

It will be appreciated that the invention has been described by way of examples only, and variation may be made to the embodiments described, without departing from the scope of invention.

**Claims**

1. An apparatus for improving signal mismatch compensation, the signal mismatch occurs between first and second RF signals, the apparatus comprising: at least one switch which applies a first RF signal, present on a first pathway, and a second RF signal, present on a second pathway, to respective first and second frequency mixers, during a first time period; the mixers providing a first pair of mixed first and second RF signals; means for reversing the at least one switch, during a subsequent time period, so that the first RF signal is applied to the second mixer, via the second pathway, and the second RF signal is applied to the first mixer, via the first pathway ; the mixers thereby provide a second pair of mixed first and second RF signals; monitoring means provided to monitor respective first and second pairs of mixed RF signals during an interval, said interval comprising a plurality of sequential time periods; the monitoring means providing time averaged values for the first and second signals in each of said first and second pairs of RF signals, so that effects of signal mismatch on the first and second RF signals are minimised in each channel, by subjecting said RF signals in each channel, for substantially the same time, to the same pathways.

2. An apparatus according to claim 1 wherein the first and second signals are orthogonal one to another.

3. An apparatus according to claim 2 wherein the first and second signals are encoded quadrature components of an OFDM signal.

4. An apparatus according to any preceding claim wherein frequency mixing is performed at a baseband frequency, typically around 20 MHz.

5. An apparatus according to claim 4 wherein means is provided for down conversion from an intermediate to a baseband frequency.

6. An apparatus according to claim 5 wherein the down conversion is achieved by multiplication with a scale factor.

7. An apparatus according to any preceding claim wherein two switches are provided, each for the respective first and second channels.

8. An apparatus according to claim 7 wherein the switches are controlled by way of a micro-processor.

9. An apparatus according to claim 8 including at least one flip-flop associated with each channel which receives either of said first or second RF signals.

10. An apparatus according to any preceding claim including a frequency mismatch compensator.

11. An apparatus according to claim 10 included in an adaptive Radio Frequency (RF) filter.

12. An apparatus according to any preceding claim wherein means is provided for generating a test signal digitally and sending a time domain sample of the test signal to a Digital/Analog Converter (DAC) and subsequently to an RF Transceiver in a test mode.

13. An apparatus according to claim 12 wherein means is provided to route the test signal through the I and Q paths of the transmit chain.

14. An apparatus according to claim 12 wherein means is provided to route the test signal through the I and Q paths of the receive chain.

15. An apparatus according to claim 12 wherein transmit and receive filters are combined to a single set of filters and which are capable of being used in both transmit and receive modes using multiplexers.

16. An apparatus according to any of claims 12 to 15 wherein transmit and receive paths are selected by multiplexers before and after the filters are switched to receive or transmit modes.

17. A method of signal mismatch compensation comprising: applying a first training signal, of known characteristics, to a circuit which includes at least one filter, receiving a filtered training signal, from the circuit, deriving a transfer function from the received filtered signal; obtaining the inverse transfer function and applying the inverse transfer function to a subsequently received signal in order to correct any signal mismatch in the subsequently received signal.

18. A method according to claim 17 wherein transmit and receive filters are combined to form a single set of filters which may be used in both transmit and receive modes, in conjunction with one or more multiplexers

19. A method according to claim 18 wherein the transmit and receive paths are selected by multiplexers before and after the filters are switched to receive or transmit instants.

20. A method according to either claim 17 or 18 wherein a test or training signal is generated digitally and a time domain sample of the test or training signal is sent to a DAC and subsequently to an RF transceiver in a test mode.

21. A method according to claim 20 wherein the test signal is routed through the I and Q paths of the transmit chain.

22. A method according to claim 20 wherein the test signal is routed through the I and Q paths of the receive chain.

OTHERS ← HYPERLAN2 CHANNELS → OTHERS

C₁ C₂ C₃ C₄ C₅

5.17 GHz            5.33 GHz            FREQ.

*FIG. 1A*

LO1            FREQ.

*FIG. 1B*

FREQ.

*FIG. 1C*

LO2            FREQ.

*FIG. 1D*

10  30  50
MHz            FREQ.

*FIG. 1E*

10  30  50
MHz            FREQ.

*FIG. 1F*

**FIG. 1G**

OFDM DEMOD.

OFDM MOD

ADC-1 — nBIT
ADC-Q — nBIT
DAC-1 — nBIT
DAC-Q — nBIT

I-Rx (f)
Q-Rx
I-Tx
Q-Tx

LPF-I
LPF-Q
LPF-I
LPF-Q

(e)

SIN COS IF VCO

(d)

BPF
BPF

(c)

(b)

BPF

BPF

RF VCO

(a)

RF

L01

L02

COMPLEX
SIGNALS

CYCLIC PREFIX
INSERTION

REAL
SIGNALS

$A(i)exp(jPH(i))$

IFFT
(SIZE N)

P TO S

DAC → TO I PATH

DAC → TO Q PATH

## FIG. 2

BASE BAND I/Q
GENERATION

BASE BAND
DEMODULATION

$A \sin\Omega_V t$
$+B \cos\Omega_V t$
$+C \sin\Omega_L t$
$+D \cos\Omega_L t$

$\Omega_V = \omega + \omega\beta$
$\Omega_L = \omega - \omega\beta$

$\cos\omega t$

$\sin\omega t$

LPF  I

LPF  Q

$\cos\omega\beta t$

LPF  X1

$\sin\omega\beta t$

LPF  X4

$\frac{D}{2}$

$\frac{B}{2}$

D
CHANNEL

B
CHANNEL

$\cos\omega\beta t$

LPF  X2

$\sin\omega\beta t$

LPF  X3

$\frac{A}{2}$

$\frac{C}{2}$

A
CHANNEL

C
CHANNEL

## FIG. 3a

A

$\omega\beta$    $\Omega_L$    $\omega$    $\Omega_V$

FREQ

DC  BB

$2\omega\beta$

## FIG. 3b

$$\begin{pmatrix} +A\ \sin\Omega_V t\ +B\ \cos\Omega_V t \\ +C\ \sin\Omega_L t\ +D\ \cos\Omega_L t \end{pmatrix} \cdot \cos\omega t \rightarrow I \qquad \begin{pmatrix} +A\ \sin\Omega_V t\ +B\ \cos\Omega_V t \\ +C\ \sin\Omega_L t\ +D\ \cos\Omega_L t \end{pmatrix} \cdot \sin\omega t \rightarrow Q \quad (a)$$

$$I = \frac{1}{2} \cdot \begin{pmatrix} +A\cdot\sin\omega\beta t +B\cdot\cos\omega\beta t \\ -C\cdot\sin\omega\beta t +D\cdot\cos\omega\beta t \end{pmatrix}$$

$$Q = \frac{1}{2} \cdot \begin{pmatrix} +A\cdot\cos\omega\beta t\ -B\cdot\sin\omega\beta t \\ -C\cdot\cos\omega\beta t +D\cdot\sin\omega\beta t \end{pmatrix} \qquad (b)$$

$$I \cdot \cos_{\omega\beta} t \rightarrow X1 = (+B+D)/4$$
$$Q \cdot \cos_{\omega\beta} t \rightarrow X2 = (+A+C)/4$$
$$I \cdot \sin_{\omega\beta} t \rightarrow X3 = (+A-C)/4$$
$$Q \cdot \sin_{\omega\beta} t \rightarrow X4 = (-B+D)/4 \qquad (c)$$

*FIG. 4*

A - CHANNEL: X2+X3=A/2
B - CHANNEL: X1-X4=B/2
C - CHANNEL: X2-X3=C/2
D - CHANNEL: X1+X4=D/2      (d)

*FIG. 5*

$$\left(\begin{array}{l}+A\ \sin\Omega_v t +B\ \cos\Omega_v t \\ +C\ \sin\Omega_L t +D\ \cos\Omega_L t\end{array}\right) \cdot \cos(\omega t+\varepsilon)\cdot(1+\delta) \rightarrow I$$

$$\left(\begin{array}{l}+A\ \sin\Omega_v t +B\ \cos\Omega_v t \\ +C\ \sin\Omega_L t +D\ \cos\Omega_L t\end{array}\right) \cdot \sin(\omega t-\varepsilon)\cdot(1-\delta) \rightarrow Q \qquad \text{(a)}$$

$$I=\frac{1}{2}(1+\delta)\cdot\left(\cos\varepsilon\cdot\left(\begin{array}{l}+A\cdot\sin\omega\beta t+B\cdot\cos\omega\beta t \\ -C\cdot\sin\omega\beta t+D\cdot\cos\omega\beta t\end{array}\right) -\sin\varepsilon\cdot\left(\begin{array}{l}+A\cdot\cos\omega\beta t -B\cdot\sin\omega\beta t \\ +C\cdot\cos\omega\beta t+D\cdot\sin\omega\beta t\end{array}\right)\right)$$

$$Q=\frac{1}{2}(1-\delta)\cdot\left(\cos\varepsilon\cdot\left(\begin{array}{l}+A\cdot\cos\omega\beta t -B\cdot\sin\omega\beta t \\ +C\cdot\cos\omega\beta t+D\cdot\sin\omega\beta t\end{array}\right) -\sin\varepsilon\cdot\left(\begin{array}{l}+A\cdot\sin\omega\beta t+B\cdot\cos\omega\beta t \\ -C\cdot\sin\omega\beta t+D\cdot\cos\omega\beta t\end{array}\right)\right) \qquad \text{(b)}$$

$$I\cdot\cos_{\omega\beta}t \rightarrow X1\ (1+\delta)\cdot(\cos\varepsilon\cdot(+B+D)+\sin\varepsilon\cdot(-A-C))\cdot 1/4$$
$$Q\cdot\cos_{\omega\beta}t \rightarrow X2\ (1-\delta)\cdot(\cos\varepsilon\cdot(+A+C)+\sin\varepsilon\cdot(-B-D))\cdot 1/4$$
$$I\cdot\sin_{\omega\beta}t \rightarrow X3\ (1+\delta)\cdot(\cos\varepsilon\cdot(+A-C)+\sin\varepsilon\cdot(+B-D))\cdot 1/4$$
$$Q\cdot\sin_{\omega\beta}t \rightarrow X4\ (1-\delta)\cdot(\cos\varepsilon\cdot(-B+D)+\sin\varepsilon\cdot(-A+C))\cdot 1/4 \qquad \text{(c)}$$

$$(X2+X3)\cdot 2/\cos\varepsilon =+A \quad | \;-C\cdot\delta -D\cdot\tan\varepsilon\; | \;+B\cdot\delta\cdot\tan\varepsilon\;|$$
$$(X1-X4)\cdot 2/\cos\varepsilon =+B \quad | \;+D\cdot\delta -C\cdot\tan\varepsilon\; | \;-A\cdot\delta\cdot\tan\varepsilon\;|$$
$$(X2-X3)\cdot 2/\cos\varepsilon =+C \quad | \;-A\cdot\delta -B\cdot\tan\varepsilon\; | \;+D\cdot\delta\cdot\tan\varepsilon\;|$$
$$(X1+X4)\cdot 2/\cos\varepsilon =+D \quad | \;+B\cdot\delta -A\cdot\tan\varepsilon\; | \;-C\cdot\delta\cdot\tan\varepsilon\;| \qquad \text{(d)}$$

SUBCARRIER CROSSTALK          I/Q CROSSTALK

*FIG. 6*

EP 1 271 871 A1

FIG. 7

FIG. 8

FIG. 9

EP 1 271 871 A1

FIG. 11

FIG. 10

**FIG. 12**

$$Ia = \frac{1}{2}(1+\delta) \cdot \left(\cos\varepsilon \cdot \begin{pmatrix} +A \cdot \sin\omega\beta t + B \cdot \cos\omega\beta t \\ -C \cdot \sin\omega\beta t + D \cdot \cos\omega\beta t \end{pmatrix} -\sin\varepsilon \cdot \begin{pmatrix} +A \cdot \cos\omega\beta t - B \cdot \sin\omega\beta t \\ +C \cdot \cos\omega\beta t + D \cdot \sin\omega\beta t \end{pmatrix}\right)$$

$$Ir = \frac{1}{2}(1-\delta) \cdot \left(\cos\varepsilon \cdot \begin{pmatrix} +A \cdot \sin\omega\beta t + B \cdot \cos\omega\beta t \\ -C \cdot \sin\omega\beta t + D \cdot \cos\omega\beta t \end{pmatrix} +\sin\varepsilon \cdot \begin{pmatrix} +A \cdot \cos\omega\beta t - B \cdot \sin\omega\beta t \\ +C \cdot \cos\omega\beta t + D \cdot \sin\omega\beta t \end{pmatrix}\right)$$

$$Qa = \frac{1}{2}(1+\delta) \cdot \left(\cos\varepsilon \cdot \begin{pmatrix} +A \cdot \cos\omega\beta t - B \cdot \sin\omega\beta t \\ +C \cdot \cos\omega\beta t + D \cdot \sin\omega\beta t \end{pmatrix} +\sin\varepsilon \cdot \begin{pmatrix} +A \cdot \sin\omega\beta t + B \cdot \cos\omega\beta t \\ -C \cdot \sin\omega\beta t + D \cdot \cos\omega\beta t \end{pmatrix}\right)$$

$$Qr = \frac{1}{2}(1-\delta) \cdot \left(\cos\varepsilon \cdot \begin{pmatrix} +A \cdot \cos\omega\beta t - B \cdot \sin\omega\beta t \\ +C \cdot \cos\omega\beta t + D \cdot \sin\omega\beta t \end{pmatrix} -\sin\varepsilon \cdot \begin{pmatrix} +A \cdot \sin\omega\beta t + B \cdot \cos\omega\beta t \\ -C \cdot \sin\omega\beta t + D \cdot \cos\omega\beta t \end{pmatrix}\right)$$

(a)

$$Ic = \frac{1}{2}(Ia+Ir) = \frac{1}{2}\cos\varepsilon \cdot \begin{pmatrix} +A \cdot \sin\omega\beta t + B \cdot \cos\omega\beta t \\ -C \cdot \sin\omega\beta t + D \cdot \cos\omega\beta t \end{pmatrix} - \frac{1}{2}\delta \cdot \sin\varepsilon \cdot \begin{pmatrix} +A \cdot \cos\omega\beta t - B \cdot \sin\omega\beta t \\ +C \cdot \cos\omega\beta t + D \cdot \sin\omega\beta t \end{pmatrix}$$

$$Qc = \frac{1}{2}(Qa+Qr) = \frac{1}{2}\cos\varepsilon \cdot \begin{pmatrix} +A \cdot \cos\omega\beta t - B \cdot \sin\omega\beta t \\ +C \cdot \cos\omega\beta t + D \cdot \sin\omega\beta t \end{pmatrix} + \frac{1}{2}\delta \cdot \sin\varepsilon \cdot \begin{pmatrix} +A \cdot \sin\omega\beta t + B \cdot \cos\omega\beta t \\ -C \cdot \sin\omega\beta t + D \cdot \cos\omega\beta t \end{pmatrix}$$

(b)

$$(X2+X3) \cdot 2/\cos\varepsilon = +A \;\; +B \cdot \delta \cdot \tan\varepsilon$$
$$(X1-X4) \cdot 2/\cos\varepsilon = +B \;\; -A \cdot \delta \cdot \tan\varepsilon$$
$$(X2-X3) \cdot 2/\cos\varepsilon = +C \;\; +D \cdot \delta \cdot \tan\varepsilon$$
$$(X1+X4) \cdot 2/\cos\varepsilon = +D \;\; -C \cdot \delta \cdot \tan\varepsilon$$

I/Q CROSSTALK

(c)

**FIG. 13**

22

*FIG. 14*

*FIG. 15*

FIG. 16

FIG. 17

**FIG. 18**

**FIG. 19**

FROM IF
MIXER-I

```
[MUX] → [LPF-I] → [MUX] → [ADC-I] →
```

TO IF
MIXER-I

[DAC-I] ←

BASEBAND
DSP

TO IF
MIXER-Q

[DAC-Q] ←

[MUX] → [LPF-Q] → [MUX] → [ADC-Q] →

FROM IF
MIXER-Q

*FIG. 20*

FIG. 21

EP 1 271 871 A1

FIG. 22

EP 1 271 871 A1

FIG. 23

EP 1 271 871 A1

FIG. 24

*FIG. 25*

**European Patent Office**

## EUROPEAN SEARCH REPORT

Application Number

EP 01 40 1631

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 978 823 A (KOSLOV ET AL.) 2 November 1999 (1999-11-02) * column 12, line 1 - line 6; figure 17 * | 1-16 | H04L27/00 |
| X | BREEMS ET AL.: "A 1.8mW CMOS sigma-delta modulator with integrated mixer for A/D conversion of IF signals" IEEE SOLID-STATE CIRCUITS CONFERENCE, 15 - 17 February 1999, pages 52-53, XP010329796 Piscatway, US ISBN: 0-7803-5126-6 * page 52, left-hand column, paragraph 1 * * figures 3.2.2,3.2.3 * | 1-16 | |
| A | US 6 157 235 A (BAUTISTA, BASTANI) 5 December 2000 (2000-12-05) * figure 2 * | 1-16 | |
| E | WO 01 69876 A (PHILIPS) 20 September 2001 (2001-09-20) * abstract * | 1,2,7 | TECHNICAL FIELDS SEARCHED (Int.Cl.7) |
| | | | H04L |
| X | TOMOHIDE MIYAGI, HIROSHI OCHI: "An alias-free subband adaptive equalizer for OFDM system" IEEE INTERNATIONAL CONFERENCE ON ACOUSTICS, SPEECH, AND SIGNAL PROCESSING, 7 - 11 May 2001, pages 2413-2416 vol.4, XP002201514 Piscataway, US * abstract * * section 3.4 * | 17-22 | |

-/--

The present search report has been drawn up for all claims

| Place of search | Date of completion of the search | Examiner |
|---|---|---|
| THE HAGUE | 7 June 2002 | Scriven, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | European Patent | Application Number |
|---|---|---|
| | Office | EP 01 40 1631 |

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

## EUROPEAN SEARCH REPORT

**European Patent Office**

**Application Number**

EP 01 40 1631

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | COLINA-MORLESQ: "On-line neural network control applications"<br>IEEE WORLD CONGRESS ON COMPUTATIONAL INTELLIGENCE ,<br>27 June 1994 (1994-06-27), pages 2494-2499, XP010127589<br>New York, US<br>* section 4 * | 17 | |
| X | US 5 410 605 A (HIDESHI SAWADA, HISASHI SANO) 25 April 1995 (1995-04-25)<br>* column 1, line 18 - line 34 *<br>* column 1, line 50 - line 55 * | 17 | |
| X | GB 2 272 589 A (LINEAR MODULATION TECHNOLOGY) 18 May 1994 (1994-05-18)<br>* abstract * | 17-22 | |
| A | BENEDETTO, MANDARINI: "Analysis of the effect of the I/Q base-band filter mismatch in an OFDM modem"<br>WIRELESS PERSONAL COMMUNICATIONS,<br>vol. 12, no. 2, February 2000 (2000-02), pages 175-186, XP000890750<br>NL<br>* the whole document * | 17-22 | TECHNICAL FIELDS SEARCHED (Int.Cl.7) |
| E | EP 1 130 866 A (ERICSSON)<br>5 September 2001 (2001-09-05)<br>* figure 4 * | 17-22 | |
| E | WO 01 80471 A (DSPC TECHNOLOGIES)<br>25 October 2001 (2001-10-25)<br>* page 3, line 2 - line 6 *<br>* page 3, line 8 - line 14 *<br>* figure 2 * | 17,20,21 | |

The present search report has been drawn up for all claims

| Place of search | Date of completion of the search | Examiner |
|---|---|---|
| THE HAGUE | 7 June 2002 | Scriven, P |

| | | |
|---|---|---|
| **European Patent** **Office** | **LACK OF UNITY OF INVENTION** **SHEET B** | **Application Number** EP 01 40 1631 |

The Search Division considers that the present European patent application does not comply with the requirements of unity of invention and relates to several inventions or groups of inventions, namely:

1. Claims: 1-16

   Compensation of quadrature mismatching, by switching between parallel paths.

2. Claims: 17-22

   Compensation of filter mismatch, by measuring filter response and providing a compensating filter

## ANNEX TO THE EUROPEAN SEARCH REPORT
## ON EUROPEAN PATENT APPLICATION NO.

EP 01 40 1631

07-06-2002

| Patent document cited in search report | | Publication date | Patent family member(s) | | Publication date |
|---|---|---|---|---|---|
| US 5978823 | A | 02-11-1999 | JP<br>US<br>US | 10257113 A<br>6052701 A<br>5978420 A | 25-09-1998<br>18-04-2000<br>02-11-1999 |
| US 6157235 | A | 05-12-2000 | NONE | | |
| WO 0169876 | A | 20-09-2001 | WO<br>EP<br>US | 0169876 A1<br>1183841 A1<br>2002051497 A1 | 20-09-2001<br>06-03-2002<br>02-05-2002 |
| US 5410605 | A | 25-04-1995 | JP<br>DE<br>GB | 5011783 A<br>4221292 A1<br>2257327 A ,B | 22-01-1993<br>14-01-1993<br>06-01-1993 |
| GB 2272589 | A | 18-05-1994 | DE<br>DE<br>EP<br>US | 69324210 D1<br>69324210 T2<br>0598585 A2<br>5381108 A | 06-05-1999<br>05-08-1999<br>25-05-1994<br>10-01-1995 |
| EP 1130866 | A | 05-09-2001 | EP<br>AU<br>WO<br>US | 1130866 A1<br>5615801 A<br>0165791 A1<br>2002009162 A1 | 05-09-2001<br>12-09-2001<br>07-09-2001<br>24-01-2002 |
| WO 0180471 | A | 25-10-2001 | AU<br>WO | 5062701 A<br>0180471 A2 | 30-10-2001<br>25-10-2001 |

EPO FORM P0459